# FASCICULE DE BREVET EUROPEEN

(11) **EP 0 659 333 B1**
(45) Date de publication et mention de la délivrance du brevet: **29.03.2000**
(21) Numéro de dépôt: 94440080.3
(22) Date de dépôt: 21.12.1994
(51) Int. Cl.: A01F 29/00

(54) **Machine agricole pour la distribution de produits destinés à l'alimentation du bétail et/ou au paillage**
Landwirtschaftliche Maschine zur Verteilung von Viehfutter und/oder zum Stroheinstreu
Agricultural machine for the distribution of products to feed the livestock and/or for straw bedding

(30) Priorité: 23.12.1993 FR 9315714
(43) Date de publication de la demande: 28.06.1995
(73) Titulaire: SOCOMEP S.A., F-86170 Neuville De Poitou (FR)
(72) Inventeur: Besson, Claude, F-86110 Mirebeau (FR)
(74) Mandataire: Andres, Jean-Claude

(56) Documents cités:
- EP-A- 0 371 681
- EP-A- 0 568 961
- DE-A- 3 535 437
- FR-A- 2 586 525
- GB-A- 2 070 401
- US-A- 3 035 621
- US-A- 5 215 266

## Description

La présente invention concerne une machine agricole pour la distribution de produits destinés à l'alimentation du bétail ou au paillage, comportant notamment un réceptacle avec deux parois latérales, un mécanisme de déplacement des produits qui est disposé dans le fond du réceptacle et un dispositif de déchiquetage et de distribution des produits qui est placé dans un carter qui est situé à une extrémité dudit réceptacle et comporte une grande ouverture dirigée vers ce réceptacle et une ouverture latérale pour l'éjection des produits, lequel dispositif de déchiquetage et de distribution est constitué par un disque rotatif muni de pales d'éjection et comporte sur le côté qui est dirigé vers le réceptacle un moyen de régulation de la quantité de produits arrivant au disque et aux pales d'éjection.

Cette machine doit assurer une distribution régulière des produits, notamment lorsqu'il s'agit d'herbe ensilée en balles rondes enrubannées, avec une importante teneur en humidité. Cette herbe est alors très compacte. De ce fait, elle pourrait parvenir aux pales d'éjection par paquets de plus ou moins grand volume. Ces pales projetteraient cette herbe dans les auges d'alimentation d'une manière toute aussi irrégulière. En sus, des paquets trop volumineux provoqueraient le blocage du dispositif de déchiquetage et de distribution.

Une machine connue dans la demande de brevet FR 2 586 525 comporte un dispositif de déchiquetage et de distribution avec un outil pour le démêlage et un outil intercalaire qui régularise l'arrivée des produits aux pales d'éjection. Cet agencement est compliqué et n'évite pas des accumulations de produits au niveau de l'outil intercalaire.

La présente invention a notamment pour but de remédier aux inconvénients précités. Elle doit permettre avec des moyens simples une distribution plus régulière des différents produits et en particulier de l'ensilage sous forme de balles.

A cet effet, une importante caractéristique de l'invention consiste en ce que le moyen de régulation de la quantité de produits arrivant au disque et aux pales d'éjection est constitué par au moins un anneau concentrique au disque et se situant à une certaine distance du disque, au-dessus du mécanisme de déplacement des produits, lequel anneau possède une paroi sensiblement cylindrique et de faible épaisseur avec au moins une ouverture centrale par laquelle passent des produits à distribuer.

Dans ce mode de réalisation, les produits à distribuer passent en partie par la ou les ouvertures du ou des anneaux du moyen de régulation avant d'accéder directement au disque portant les pales d'éjection. Le diamètre et le nombre de cette ou ces ouvertures permettent de doser la quantité des produits. Par ailleurs, chacun des anneaux du dispositif de régulation possède une paroi de faible épaisseur qui s'engage dans les produits contenus dans le réceptacle et assure ainsi un positionnement relativement stable de ceux-ci. Cela permet d'obtenir une plus grande régularité au niveau du prélèvement, en particulier lorsqu'il s'agit de fourrage sous forme de balles rondes.

Selon une autre caractéristique de l'invention, la machine comporte un organe de retenue fixe, situé au-dessus du moyen de régulation. Cet organe évite l'arrivée au disque et aux pales d'éjection de produits qui pourraient se détacher de la masse contenue dans le réceptacle et passer par-dessus le moyen de régulation.

Une autre caractéristique de l'invention consiste en ce que le réceptacle comporte deux parois latérales et que la paroi qui est située du côté sur lequel le dispositif de déchiquetage et de distribution tourne vers le bas lors de sa rotation, porte un écran qui s'étend en direction du moyen de régulation. Cet écran empêche l'accès au disque et aux pales d'éjection de produits qui pourraient passer entre ladite paroi et l'organe de régulation. Il contribue ainsi à améliorer la régularité de la distribution des produits.

L'agencement selon l'invention permet également de réduire le diamètre du dispositif de déchiquetage et de projection, ainsi que les dimensions du carter dans lequel se situe ce dispositif. De ce fait, l'encombrement de la machine peut également être réduit pour faciliter le passage dans les bâtiments d'élevage et pour améliorer la visibilité de l'utilisateur dans le réceptacle et sur les auges. Ladite réduction permet aussi de réaliser un gain de poids.

Une autre caractéristique de l'invention consiste en ce que le carter dans lequel est logé le dispositif de déchiquetage et de distribution présente une ouverture latérale sur un secteur d'environ 90°. Cette ouverture commence sensiblement au niveau d'un plan horizontal passant par le milieu du dispositif de déchiquetage et de distribution. Cet agencement évite qu'il y ait des accumulations de produits, notamment au niveau de la sortie du carter et contribue à la régularité de la distribution.

D'autres caractéristiques et avantages de l'invention ressortiront de la description ci-après d'exemples de réalisation non limitatifs de l'invention, avec référence aux dessins annexés dans lesquels :
- La figure 1 représente une vue de côté d'une machine selon l'invention,
- La figure 2 représente une coupe longitudinale de la machine selon un plan vertical,
- La figure 3 représente une vue de derrière de la machine,
- La figure 4 représente une vue de derrière d'un autre exemple de réalisation,
- La figure 5 représente, à plus grande échelle, une vue de face du dispositif de déchiquetage et de distribution,
- La figure 6 représente, à plus grande échelle, une vue de côté avec une coupe partielle du dispositif de déchiquetage et de distribution.

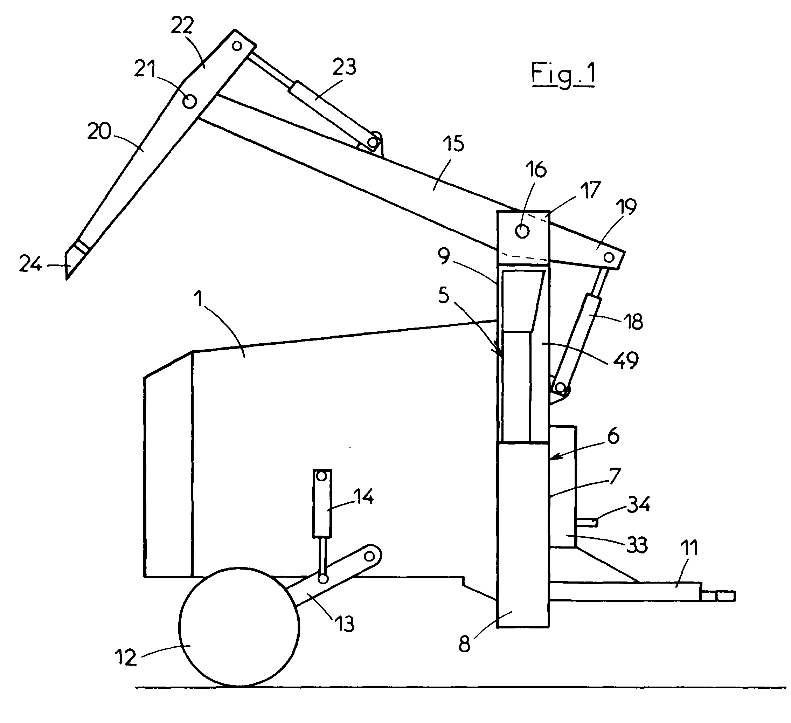

Tel que cela ressort des figures 1 à 3, la machine selon l'invention comporte un réceptacle (1) destiné à recevoir les produits à distribuer. Il est constitué par un fond (2) et deux parois latérales (3 et 4) sensiblement verticales. A l'extrémité avant de ce réceptacle est disposé un dispositif de déchiquetage et de distribution (5) des produits. Ce dispositif (5) est logé dans un carter (6) qui est lié audit réceptacle (1). Ce carter (6) se compose d'une paroi avant (7), d'une paroi latérale (8) sensiblement cylindrique et d'une paroi arrière (9) avec une grande ouverture (10) qui est dirigée vers le réceptacle (1) et par laquelle passe les produits. Sur le côté avant du carter (6) est prévu un timon (11) pour l'accrochage à un tracteur servant à animer et à déplacer la machine. Deux roues de transport (12) sont fixées sur des bras (13) qui sont articulés par rapport au réceptacle (1). Ce dernier est déplaçable en hauteur par rapport aux roues (12) au moyen de vérins hydrauliques (14) placés entre le réceptacle (1) et les bras (13) des roues (12). Un bras de chargement (15) est par ailleurs articulé au moyen d'un axe (16) sensiblement horizontal sur des supports (17) solidaires du carter (6). Ce bras (15) est déplaçable autour de l'axe d'articulation (16) à l'aide d'un vérin hydraulique (18) qui est articulé sur un prolongement (19) dudit bras (15) et sur le carter (6). L'extrémité opposée du bras de chargement (15) porte une paroi (20). La largeur de cette paroi (20) est sensiblement égale à la largeur intérieure du réceptacle (1), de manière à pouvoir fermer le côté arrière de celui-ci. La paroi (20) est articulée sur le bras (15) au moyen d'un axe (21) sensiblement horizontal. Elle comporte un prolongement (22) dirigé vers le haut, auquel est relié un vérin hydraulique (23). Celui-ci est également articulé sur le bras (15) et permet de déplacer la paroi (20) autour de l'axe d'articulation (21). Cette paroi (20) peut comporter à son extrémité inférieure des pointes (24) ou des couteaux permettant de prélever des produits ensilés. Dans le fond du réceptacle (1) est disposé un mécanisme (25) servant à déplacer les produits en direction du dispositif de déchiquetage et de distribution (5). Dans l'exemple représenté, ce mécanisme (25) est constitué par un tapis en caoutchouc avec des barrettes transversales (26), animé d'un mouvement d'avance continu tel que indiqué par la flèche (F). Ce mouvement peut être obtenu à partir de l'arbre de prise de force du tracteur ou à l'aide d'un moteur auxiliaire. Dans ce cas, le tapis couvre toute la surface du fond (2). Il ne subsiste ainsi pas de parties non animées susceptibles de freiner le déplacement des produits. Ce mécanisme (25) pourrait également être constitué par des rouleaux transversaux entraînés en rotation ou par une ou plusieurs vis hélicoïdales placées dans le sens de la longueur du réceptacle.

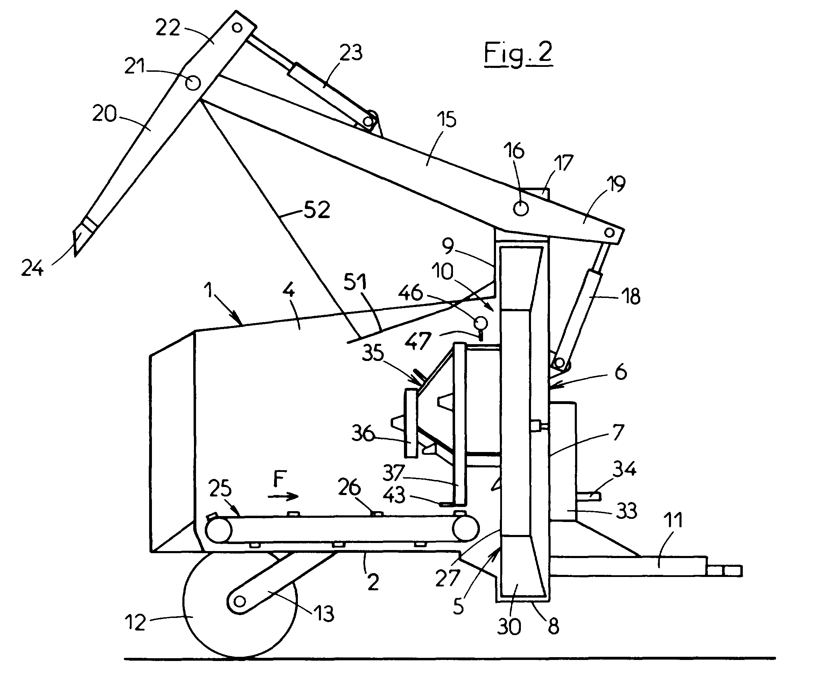

Comme cela ressort des figures 2, 5 et 6, le dispositif de déchiquetage et de distribution (5) est constitué par un disque (27) qui est fixé sur un moyeu (28) monté sur un arbre (29). Ce disque (27) se situe dans le carter (6). Il porte près de sa périphérie des pales d'éjection (30, 31) qui se situent également dans le carter (6). Les pales (30, 31) forment deux groupes avec des longueurs légèrement différentes. Les bords libres des pales (30) les plus longues sont proches de la paroi latérale (8) du carter (6). Lesdites pales (30, 31) sont en sus reliées entre elles au moyen d'un renfort circulaire (32) situé à l'avant du disque (27). L'ensemble formé par l'arbre (29), le moyeu (28), le disque (27), les pales (30, 31) et le renfort (32) est entraîné en rotation dans le sens de la flèche (R) à partir de l'arbre de prise de force du tracteur. A cet effet, ledit arbre (29) est lié à des moyens de transmission situés dans un boîtier (33) qui possède un arbre d'entrée (34) pouvant être raccordé à l'arbre de prise de force.

Le disque (27) porte sur le côté qui est dirigé vers le réceptacle (1) un moyen de régulation (35) de la quantité de produits arrivant audit disque (27) et aux pales d'éjection (30, 31). Ce moyen (35) est constitué par deux anneaux (36 et 37) concentriques au disque (27) et situés à une certaine distance dudit disque (27). Ces deux anneaux (36 et 37) ont des diamètres différents et sont situés à différentes distances du disque (27). L'anneau (36) qui possède le plus petit diamètre est plus éloigné du disque (27) que l'autre anneau (37). Ces deux anneaux (36 et 37) sont fixés sur des barrettes (38) qui sont solidaires du disque (27).

Chacun de ces anneaux (36, 37) est constitué par une paroi (39, 40) de faible épaisseur, en forme de cylindre avec une ouverture centrale (41, 42) par laquelle passent les produits. La paroi (39, 40) de chacun de ces anneaux (36, 37) s'étend dans une direction perpendiculaire au disque (27). Lors de la distribution, ces parois (39, 40) pénètrent dans les produits contenus dans le réceptacle (1) et assurent leur positionnement.

Le nombre indiqué ci-dessus de tels anneaux (36, 37) n'est pas limitatif. Il est possible de n'en prévoir qu'un seul ou, au contraire, d'en prévoir davantage sans sortir pour autant du domaine de l'invention. Il est également possible de modifier leur forme.

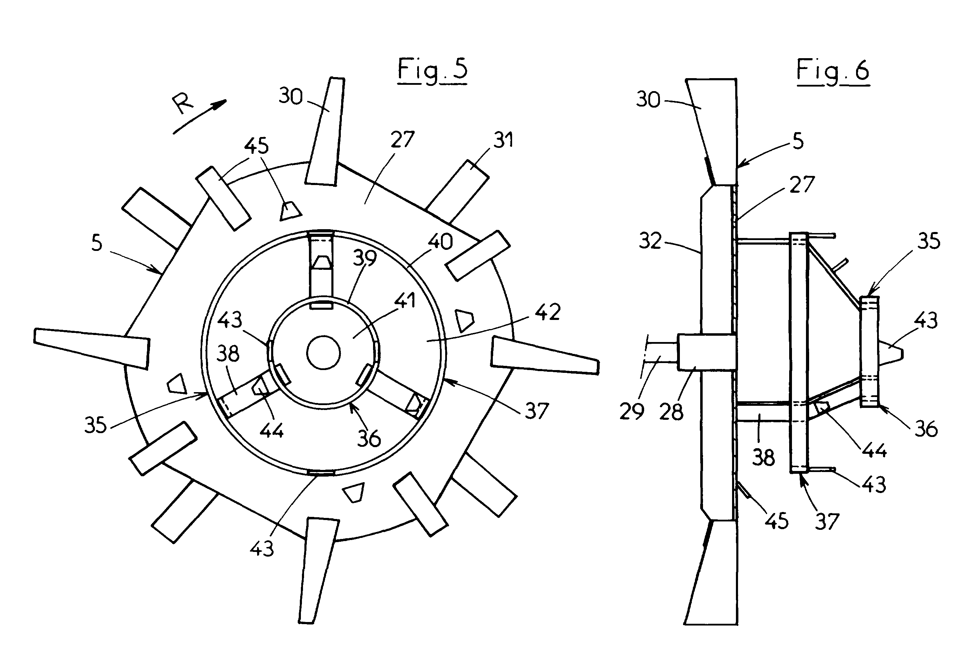

Les anneaux (36, 37) sont équipés de couteaux (43). Ceux-ci s'étendent avantageusement dans le prolongement de leurs parois (39 et 40). Les barrettes (38) qui portent les anneaux (36 et 37) comportent une partie inclinée munie d'un couteau (44). Le disque (27) lui-même est équipé de couteaux (45) dans la zone située au-delà des anneaux (36 et 37) (voir figure 5).

Comme cela ressort particulièrement de la figure 2, les anneaux (36 et 37) du moyen de régulation (35) se situent dans le réceptacle (1), au-dessus du mécanisme de déplacement (25). L'anneau (37) qui possède le plus grand diamètre passe avantageusement à proximité dudit mécanisme (25) et assure son nettoyage durant le fonctionnement.

Au-dessus du moyen de régulation (35) est prévu un organe de retenue fixe (46). Il s'étend en travers du réceptacle (1), à proximité du disque (27) et est fixé aux deux parois latérales (3 et 4). Il comporte des couteaux (47) qui sont dirigés vers le bas, c'est-à-dire en direction du moyen de régulation (35) et qui coopèrent avec les couteaux (43 et 44) de ce dernier.

La paroi latérale (3) du réceptacle (1), qui se situe du côté sur lequel le dispositif de déchiquetage et de distribution (5) tourne vers le bas (pour un observateur placé à l'arrière de la machine) lors du fonctionnement, porte un écran (48). Celui-ci est dirigé vers le moyen de régulation (35) en étant incliné vers le disque (27). Ledit écran (48) s'étend vers le bas jusqu'à proximité du mécanisme de déplacement (25). Sa partie inférieure peut être réalisée en une matière souple afin d'éviter des coincements de produits. Il s'étend vers le haut jusque au-delà d'un plan horizontal (P) passant par le milieu du dispositif de déchiquetage et de distribution (5). Ledit écran (48) évite l'introduction de produits dans le carter (6) entre le dispositif de régulation (35) et la paroi latérale (3) du réceptacle (1). De tels produits devraient pratiquement faire tout le tour du carter (6) avant d'être évacués et pourraient ainsi provoquer des bourrages. Un écran similaire peut éventuellement être prévu sur l'autre paroi (4) du réceptacle (1).

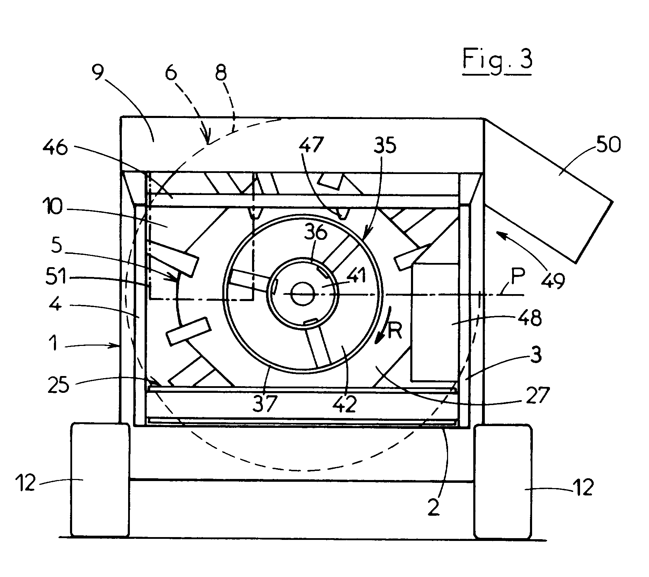

Il ressort d'autre part des figures 2 et 3 qu'une bavette (51) se situe devant l'ouverture (10) du carter (6). Cette bavette (51) est représentée en traits mixtes sur la figure 3 afin de préserver sa clarté. Elle est reliée à la paroi (9) du carter (6) et s'étend dans la partie supérieure de l'intervalle entre le moyen de régulation (35) et la paroi latérale (4) qui est située du côté sur lequel le dispositif de déchiquetage et de distribution (5) tourne vers le haut lors de sa rotation dans le sens (R). Cette bavette (51) est avantageusement réalisée en caoutchouc souple. Elle est reliée au bras de chargement (15) au moyen d'un lien souple (52). De cette manière, elle peut être déplacée vers le haut à l'aide du bras (15) lors du chargement des produits à distribuer dans le réceptacle (1). Elle repose alors sur lesdits produits et empêche la projection vers le haut de particules coupées. En sus, elle favorise l'aspiration des produits par le dispositif de déchiquetage et de distribution (5).

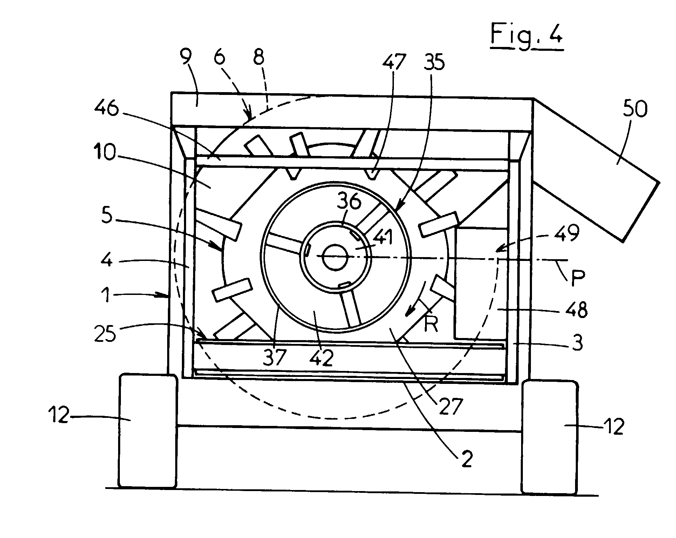

La figure 4 montre un exemple de réalisation dans lequel le diamètre du dispositif de déchiquetage et de distribution (5) et celui de la paroi latérale (8) sensiblement cylindrique du carter (6) sont réduits. Le diamètre de ladite paroi (8) peut alors être sensiblement égal ou légèrement inférieur à la largeur intérieure du réceptacle (1). Dans ce cas, l'écran (48) qui guide les produits vers le moyen de régulation (35) empêche leur accumulation contre la paroi arrière (9) du carter (6).

Il ressort des figures 1 et 3 que la paroi latérale (8) sensiblement cylindrique du carter (6) présente une ouverture latérale (49) sur un secteur d'environ 90°. Cette ouverture commence sensiblement au niveau du plan (P) précité. La partie supérieure de l'ouverture (49) est prolongée par une goulotte (50).

La machine selon l'invention permet de distribuer des produits tels que du foin, de l'ensilage et notamment de l'ensilage en balles rondes ou de la paille. Ces produits sont introduits par le côté arrière dans le réceptacle (1) à l'aide du bras (15) et de la paroi (20) qu'on manoeuvre au moyen des vérins hydrauliques (18 et 23). Cette opération est facilitée par l'abaissement jusqu'au sol du réceptacle (1) au moyen des vérins hydrauliques (14). Lorsque le réceptacle (1) est rempli, la machine est amenée au lieu de distribution.

Durant l'opération de distribution le dispositif de déchiquetage et de distribution (5) et le moyen de régulation (35) sont entraînés en rotation dans le sens de la flèche (R) et le mécanisme de déplacement (5) est animé de telle sorte qu'il achemine les produits vers ledit dispositif (5). Ces produits entrent alors en contact avec le moyen de régulation (35). Les couteaux (43) des anneaux (36 et 37) coupent des tranches de ces produits et pratiquent une sorte de carottage. Ces produits coupés passent immédiatement dans les ouvertures (41 et 42) de ces anneaux (36 et 37) et parviennent au disque (27) qui les disperse et dont les couteaux (45) assurent un tranchage supplémentaire. Ensuite ces produits finement coupés parviennent aux pales (30 et 31) qui les éjectent par l'ouverture (49) dans la goulotte (50). Celle-ci les guide alors vers le lieu prévu.

Durant cette opération, les anneaux (36 et 37) et leurs couteaux (43) sont engagés dans la masse de produits. Les parois (39 et 40) qui constituent lesdits anneaux (36 et 37) assurent alors une sorte de calibrage de la quantité de produits passant par les ouvertures (41 et 42). Cette quantité est ainsi relativement régulière. En sus, ces parois (39 et 40) stabilisent les produits contenus dans le réceptacle (1) de manière à pouvoir effectuer un prélèvement à un rythme constant. D'autre part, l'écran (48) et l'organe de retenue (46) empêchent les produits d'accéder au disque (27) en passant par-dessus le moyen de régulation (35) ou entre celui-ci et la paroi latérale (3) du réceptacle (1).

La machine selon l'invention permet ainsi d'obtenir une distribution très régulière de la plupart des produits.

Il est par ailleurs possible de faire entrer des aliments complémentaires dans le réceptacle (1) afin d'obtenir un mélange homogène lors de la distribution dans les auges.

Il est évident que l'invention n'est pas limitée aux exemples de réalisation décrits et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Machine agricole pour la distribution de produits destinés à l'alimentation du bétail ou au paillage, comportant un réceptacle (1) avec deux parois latérales (3 et 4), un mécanisme (25) de déplacement des produits qui est disposé dans le fond du réceptacle (1) et un dispositif de déchiquetage et de distribution (5) des produits qui est placé dans un carter (6) qui est situé à une extrémité dudit réceptacle (1) et comporte une grande ouverture (10) dirigée vers ce réceptacle (1) et une ouverture latérale (49) pour l'éjection des produits, lequel dispositif de déchiquetage et de distribution (5) est constitué par un disque rotatif (27) muni de pales d'éjection (30, 31) et comporte sur le côté qui est dirigé vers le réceptacle (1) un moyen de régulation (35) de la quantité de produits arrivant au disque (27) et aux pales d'éjection (30, 31), caractérisée par le fait que le moyen de régulation (35) est constitué par au moins un anneau (36, 37) concentrique au disque (27) et se situant à une certaine distance du disque (27), au-dessus du mécanisme (25) de déplacement des produits, lequel anneau (36, 37) possède une paroi (39, 40) sensiblement cylindrique et de faible épaisseur avec au moins une ouverture centrale (41, 42) par laquelle passe une partie des produits à distribuer.

2. Machine selon la revendication 1, caractérisée par le fait que le moyen de régulation (35) comporte deux anneaux (36 et 37) qui ont des diamètres différents et qui sont situés à différentes distances du disque (27), l'anneau (36) qui possède le plus petit diamètre étant plus éloigné du disque (27) que l'autre anneau (37).

3. Machine selon la revendication 2, caractérisée par le fait que chacun des anneaux (36, 37) est constitué par une paroi (39, 40) de faible épaisseur.

4. Machine selon l'une quelconque des revendications précédentes, caractérisée par le fait que les anneaux (36 et 37) sont fixés sur des barrettes (38) solidaires du disque (27).

5. Machine selon la revendication 4, caractérisée par le fait que les barrettes (38) comportent des parties inclinées entre les deux anneaux (36 et 37) et portent des couteaux (44).

6. Machine selon l'une quelconque des revendications précédentes, caractérisée par le fait que chaque anneau (36, 37) est équipé de couteaux (43).

7. Machine selon la revendication 2, caractérisée par le fait que l'anneau (37) qui a le plus grand diamètre se situe à proximité de l'organe de déplacement (25).

8. Machine selon la revendication 1 ou 7, caractérisée par le fait que le mécanisme (25) de déplacement des produits est constitué par un tapis caoutchouc muni de barrettes transversales (26), animé d'un mouvement d'avance.

9. Machine selon l'une quelconque des revendications précédentes, caractérisée par le fait qu'elle comporte un organe de retenue fixe (46) situé au-dessus du moyen de régulation (35).

10. Machine selon la revendication 9, caractérisée par le fait que l'organe de retenue (46) comporte des couteaux (47) dirigés vers le moyen de régulation (35).

11. Machine selon l'une quelconque des revendications précédentes, caractérisée par le fait qu'au moins la paroi latérale (3) qui est située du côté sur lequel le dispositif de déchiquetage et de distribution (5) tourne vers le bas lors de sa rotation, porte un écran (48) qui s'étend en direction du moyen de régulation (35).

12. Machine selon la revendication 11, caractérisée par le fait que l'écran (48) s'étend vers le bas jusqu'à proximité du mécanisme de déplacement (25).

13. Machine selon la revendication 11, caractérisée par le fait que l'écran (48) s'étend vers le haut au moins jusqu'à un plan horizontal (P) passant par le milieu du dispositif de déchiquetage et de distribution (5).

14. Machine selon l'une quelconque des revendications précédentes, caractérisée par le fait qu'elle comporte une bavette (51) qui se situe devant l'ouverture (10) du carter (6), dans la partie supérieure de l'intervalle entre le moyen de régulation (35) et la paroi latérale (4) qui est située du côté sur lequel le dispositif de déchiquetage et de distribution (5) tourne vers le haut lors de sa rotation.

15. Machine selon la revendication 14, caractérisée par le fait que la bavette (51) est réalisée en caoutchouc souple.

16. Machine selon la revendication 14 ou 15, caractérisée par le fait que la bavette (51) est reliée à un bras de chargement (15) au moyen d'un lien (52).

17. Machine selon l'une quelconque des revendications précédentes, caractérisée par le fait que le carter (6) du dispositif de déchiquetage et de distribution (5) comporte une paroi latérale (8) sensiblement cylindrique présentant un diamètre qui est sensiblement égal ou légèrement inférieur à la largeur interne du réceptacle (1).

18. Machine selon l'une quelconque des revendications précédentes, caractérisée par le fait que le carter (6) du dispositif de déchiquetage et de distribution (5) comporte une paroi latérale (8) sensiblement cylindrique qui présente une ouverture latérale (49) sur un secteur d'environ 90° qui commence sensiblement au niveau d'un plan sensiblement horizontal (P) passant par le milieu du dispositif de déchiquetage et de distribution (5).

## Patentansprüche

1. Landwirtschaftliche Maschine zur Verteilung von Gut zur Viehfütterung oder zum Stroheinstreuen, die ein Behälter (1) mit zwei Seitenwänden (3 und 4), einen am Boden des Behälters (1) angeordneten Mechanismus (25) zur Bewegung des Guts und eine Vorrichtung (5) zur Zerkleinerung und Verteilung des Guts umfaßt, welche Vorrichtung (5) in einem Kasten (6) untergebracht ist, der sich an einem Ende des Behälters (1) befindet und eine zu diesem Behälter (1) weisende große Öffnung (10) und eine seitliche Öffnung (49) zum Ausschleudern des Guts aufweist, wobei die Zerkleinerungs- und Verteilvorrichtung (5) aus einer mit Ausschleuderflügeln (30, 31) versehenen drehbaren Scheibe (27) besteht und auf der zum Behälter (1) weisenden Seite ein Mittel (35) zur Regelung der an der Scheibe (27) und an den Ausschleuderflügeln (30, 31) ankommenden Gutmenge aufweist, ***dadurch gekennzeichnet,*** daß das Regelungsmittel (35) aus mindestens einem mit der Scheibe (27) konzentrischen Ring (36, 37) besteht, der sich in einem gewissen Abstand zur Scheibe (27) über dem Mechanismus (25) zur Bewegung des Guts befindet, wobei der Ring (36, 37) eine im wesentlichen zylindrische Wand (39, 40) geringer Dicke mit mindestens einer mittleren Öffnung (41, 42) aufweist, durch die ein Teil des zu verteilenden Guts durchfließt.

2. Maschine nach Anspruch 1, ***dadurch gekennzeichnet,*** daß das Regelungsmittel (35) zwei Ringe (36 und 37) mit unterschiedlichem Durchmesser aufweist, die sich in einem unterschiedlichen Abstand zur Scheibe (27) befinden, wobei der Ring (36) mit dem kleineren Durchmesser weiter von der Scheibe (27) entfernt ist als der andere Ring (37).

3. Maschine nach Anspruch 2, ***dadurch gekennzeichnet,*** daß jeder der Ringe (36, 37) aus einer Wand (39, 40) geringer Dicke besteht.

4. Maschine nach irgend einem der vorhergehenden Ansprüche, ***dadurch gekennzeichnet,*** daß die Ringe (36 und 37) an fest mit der Scheibe (27) verbundenen Stegen (38) befestigt sind.

5. Maschine nach Anspruch 4, ***dadurch gekennzeichnet,*** daß die Stege (38) zwischen den Ringen (36 und 37) geneigte Teile aufweisen und Messer (44) tragen.

6. Maschine nach irgend einem der vorhergehenden Ansprüche, ***dadurch gekennzeichnet,*** daß jeder Ring (36, 37) mit Messern (43) ausgestattet ist.

7. Maschine nach Anspruch 2, ***dadurch gekennzeichnet,*** daß sich der Ring (37) mit dem größeren Durchmesser in der Nähe des Bewegungsmechanismus (25) befindet.

8. Maschine nach Anspruch 1 oder 7, ***dadurch gekennzeichnet,*** daß der Mechanismus (25) zur Bewegung des Guts aus einer mit Querstegen (26) versehenen Gummimatte besteht, die in eine Vorwärtsbewegung versetzt ist.

9. Maschine nach irgend einem der vorhergehenden Ansprüche, ***dadurch gekennzeichnet,*** daß sie ein feststehendes Halteglied (46) aufweist, das sich über dem Regelungsmittel (35) befindet.

10. Maschine nach Anspruch 9, ***dadurch gekennzeichnet,*** daß das Halteglied (46) zu dem Regelungsmittel (35) gerichtete Messer (47) aufweist.

11. Maschine nach irgend einem der vorhergehenden Ansprüche, ***dadurch gekennzeichnet,*** daß zumindest die Seitenwand (3), die sich auf der Seite befindet, auf der die Zerkleinerungs- und Verteilvorrichtung (5) bei ihrer Drehung nach unten dreht, einen sich in Richtung des Regelungsmittels (35) erstreckenden Schirm (48) aufweist.

12. Maschine nach Anspruch 11, ***dadurch gekennzeichnet,*** daß sich der Schirm (48) nach unten bis in die Nähe des Bewegungsmechanismus (25) erstreckt.

13. Maschine nach Anspruch 11, ***dadurch gekennzeichnet,*** daß sich der Schirm (48) nach oben zumindest bis zu einer Horizontalebene (P), die durch die Mitte der Zerkleinerungs- und Verteilvorrichtung (5) verläuft, erstreckt.

14. Maschine nach irgend einem der vorhergehenden Ansprüche, ***dadurch gekennzeichnet,*** daß sie eine Schürze (51) aufweist, die sich vor der Öffnung (10) des Kastens (6) in dem oberen Teil des Abstands zwischen dem Regelungsmittel (35) und der Seitenwand (4) befindet, die sich auf der Seite befindet, auf der sich die Zerkleinerungs- und Verteilvorrichtung (5) bei ihrer Drehung nach oben dreht.

15. Maschine nach Anspruch 14, ***dadurch gekennzeichnet,*** daß die Schürze (51) aus flexiblem Gummi hergestellt ist.

16. Maschine nach Anspruch 14 oder 15, ***dadurch gekennzeichnet,*** daß die Schürze (51) mittels eines Verbindungsteils (52) mit einem Ladearm (15) verbunden ist.

17. Maschine nach irgend einem der vorhergehenden Ansprüche, ***dadurch gekennzeichnet,*** daß der Kasten (6) der Zerkleinerungs- und Verteilvorrichtung (5) eine im wesentlichen zylindrische Seitenwand (8) aufweist, deren Durchmesser im wesentlichen gleich oder etwas kleiner ist als die Innenbreite des Behälters (1).

18. Maschine nach irgend einem der vorhergehenden Ansprüche, ***dadurch gekennzeichnet,*** daß der Kasten (6) der Zerkleinerungs- und Verteilvorrichtung (5) eine im wesentlichen zylindrische Seitenwand (8) aufweist, die eine seitliche Öffnung (49) über einen Sektor von ca. 90° enthält, die im wesentlichen in Höhe einer im wesentlichen horizontalen Ebene (P), die durch die Mitte der Zerkleinerungs- und Verteilvorrichtung (5) verläuft, beginnt.

## Claims

1. Agricultural machine for distributing products intended for feeding livestock or for straw spreading, comprising a receptacle (1) with two side walls (3 and 4), a mechanism (25) for conveying the products which is arranged in the bottom of the receptacle (1) and a device (5) for shredding and distributing the products which is placed in a casing (6) located at one end of the said receptacle (1) and has a wide opening (10) directed towards this receptacle (1) and a side opening (49) for ejecting the products, which shredding and distributing device (5) consists of a rotary disc (27) equipped with ejection blades (30, 31) and has, on the side facing the receptacle (1), a means (35) of regulating the amount of product reaching the disc (27) and the ejection blades (30, 31), ***characterized in*** that the regulating means (35) consists of at least one ring (36, 37) concentric with the disc (27) and located a certain distance from the disc (27) above the mechanism (25) for conveying the products, which ring (36, 37) has an approximately cylindrical wall (39, 40) of small thickness with at least one central opening (41, 42) through which some of the products that are to be distributed pass.

2. Machine according to Claim 1, ***characterized in*** that the regulating means (35) comprises two rings (36 and 37) which have different diameters and which are located at different distances from the disc (27), the ring (36) which has the smaller diameter being further from the disc (27) than the other ring (37).

3. Machine according to Claim 2, ***characterized in*** that each of the rings (36, 37) consists of a thin wall (39, 40).

4. Machine according to any one of the preceding claims, ***characterized in*** that the rings (36 and 37) are fixed on bars (38) secured to the disc (27).

5. Machine according to Claim 4, ***characterized in*** that the bars (38) have parts which are inclined between the two rings (36 and 37) and bear knives (44).

6. Machine according to any one of the preceding claims, ***characterized in*** that each ring (36, 37) is fitted with knives (43).

7. Machine according to Claim 2, ***characterized in*** that the ring (37) with the larger diameter is located near to the conveying member (25).

8. Machine according to Claim 1 or 7, ***characterized in*** that the mechanism (25) for conveying the products consists of a rubber belt with transverse bars (26), which is given a forward motion.

9. Machine according to any one of the preceding claims, ***characterized in*** that it comprises a fixed retaining member (46) located above the regulating means (35).

10. Machine according to Claim 9, ***characterized in*** that the retaining member (46) comprises knives (47) directed towards the regulating means (35).

11. Machine according to any one of the preceding claims, ***characterized in*** that at least the side wall (3) which is on the side on which the shredding and distributing device (5) travels downwards as it rotates bears a screen (48) which extends towards the regulating means (35).

12. Machine according to Claim 11, ***characterized in*** that the screen (48) extends downwards as far as near to the conveying mechanism (25).

13. Machine according to Claim 11, ***characterized in*** that the screen (48) extends upwards at least as far as a horizontal plane (P) passing through the middle of the shredding and distributing device (5).

14. Machine according to any one of the preceding claims, ***characterized in*** that it comprises an apron (51) which is located in front of the opening (10) in the casing (6), in the upper part of the space between the regulating means (35) and the side wall (4) which is on the side on which the shredding and distributing device (5) travels upwards as it rotates.

15. Machine according to Claim 14, ***characterized in*** that the apron (51) is made of flexible rubber.

16. Machine according to Claim 14 or 15, ***characterized in*** that the apron (51) is connected to a loading arm (15) by means of a tie (52).

17. Machine according to any one of the preceding claims, ***characterized in*** that the casing (6) of the shredding and distribution device (5) has an approximately cylindrical side wall (8) with a diameter which is approximately equal to or slightly smaller than the internal width of the receptacle (1).

18. Machine according to any one of the preceding claims, ***characterized in*** that the casing (6) of the shredding and distributing device (5) comprises an approximately cylindrical side wall (8) which has a side opening (49) over a sector of about 90° which begins approximately at the approximately horizontal plane (P) passing through the middle of the shredding and distributing device (5).
